# EUROPEAN PATENT APPLICATION

(11) **EP 4 748 458 A1**
(43) Date of publication of application: **27.05.2026**
(21) Application number: 24825334.6
(22) Date of filing: 21.06.2024
(51) Int. Cl.: A63B 21/055, G05B 19/04, G09B 5/06, G09F 27/00, A63B 24/00, A63B 71/06, A63B 23/02, A63B 23/16, A63B 23/12

(54) **CONTROL METHOD AND SYSTEM FOR EXERCISE APPARATUS, AND EXERCISE APPARATUS**

(30) Priority: 21.06.2023 CN 202310751917
(71) Applicant: Beyond Power Inc., Shenzhen, Guangdong 518129 (CN)
(72) Inventor: CAI, Xing, Shenzhen, Guangdong 518129 (CN); LAN, Qiu, Shenzhen, Guangdong 518129 (CN); LI, Yuanjun, Shenzhen, Guangdong 518129 (CN)
(74) Representative: De Arpe Tejero, Manuel
(86) International application number: PCT/CN2024/100653
(87) International publication number: WO 2024/260447

(57) **Abstract**

The present invention provides a control method and system for an exercise apparatus, and an exercise apparatus. The method comprises: acquiring an association relationship between multimedia information and working parameters of an exercise apparatus; and controlling the exercise apparatus on the basis of the multimedia information and the association relationship, or, on the basis of exercise data of a user within a preset time and the association relationship, determining target multimedia information to be played. The working parameters of the exercise apparatus can be automatically adjusted on the basis of the multimedia information , and there is no need for the user to adjust the working parameters of the exercise apparatus after determining the multimedia information ; In addition, the played multimedia information can be adjusted on the basis of the working parameters of the exercise apparatus, and there is no need for the user to leave the exercise position to adjust the multimedia information, thereby simplifying the processes of the user adjusting the exercise apparatus and adjusting the played multimedia information during exercise, and improving the user experience of using the exercise apparatus during exercise.

## Description

### TECHNICAL FIELD

The present disclosure relates to the technical field of intelligent exercise devices, and in particular, to a control method of an exercise device, a control system of an exercise device, and an exercise device.

### BACKGROUND

In most current exercise devices such as a cable-based exercise machine, a user may need to walk to a weight-bearing mechanism of the machine to add or reduce weight plates when changing resistance provided by the machine. If the users also want to watch exercise videos or listen to exercise audio at the same time, they may also need to adjust the playback of the exercise videos or audio. The entire adjustment process may be cumbersome, resulting in a poor experience for the user during exercise.

### SUMMARY

The present disclosure provides a control method of an exercise device, a control system of the exercise device, and the exercise device. The present disclosure aims to reduce cumbersomeness of users adjusting the exercise device during exercise and enhance the user's experience in the exercise process.

According to a first aspect of the present disclosure, a control method of an exercise device may be provided. The control method may include: obtaining an association between multimedia content and operating parameters of the exercise device; and, controlling, according to the multimedia content and the association, the exercise device; or, determining, according to exercise data of a user within a predetermined period and the association, target multimedia content to be played.

In some embodiments, the multimedia content may include at least one video and/or at least one audio. The controlling the exercise device according to the multimedia content and the association may include: determining a target video or a target audio to be played from the multimedia content; and, determining the operating parameters of the exercise device according to the association between the target video and the operating parameters or the association between the target audio and the operating parameters.

In some embodiments, the determining the operating parameters of the exercise device according to the association between the target video and the operating parameters or the association between the target audio and the operating parameters may include: determining, according to the association between the target video and the operating parameters or the association between the target audio and the operating parameters, at least one selected from the group consisting of: an initial resistance of a cable in the exercise device; a target resistance matching with the cable when the cable is pulled to a preset distance; a resistance change mode of the cable; the number of cable pull repetitions; and, a pulling distance of the cable.

In some embodiments, the target video and/or the target audio may include a plurality of playing chapters. The determining the operating parameters of the exercise device according to the association between the target video and the operating parameters or the association between the target audio and the operating parameters may include: determining a target playing chapter according to an obtained chapter playing instruction; and, playing the target playing chapter; and, determining the operating parameters of the exercise device according to the association between the target playing chapter and the operating parameters.

In some embodiments, the method may further include: determining the chapter playing instruction according to the exercise data of the user and preset chapter playing conditions.

In some embodiments, the method may further include: determining the target multimedia content to be played on a target device according to the multimedia content. A playing region matching with the target multimedia content may further include a parameter display region. The parameter display region may be configured to display the operating parameters of the exercise device and/or the exercise data of the user.

In some embodiments, the playing region may further include a parameter control region. The parameter control region may be adjacent to, partially overlapping with, or completely overlapping with the parameter display region. The method may further include: adjusting, in response to a parameter adjustment instruction of the user in the parameter control region, the operating parameters of the exercise device.

In some embodiments, the controlling the exercise device according to the multimedia content and the association may include: obtaining personal data of the user; and, controlling the exercise device according to the personal data, the multimedia content, and the association.

In some embodiments, the determining the target multimedia content to be played according to the exercise data of the user within the predetermined period and the association may include: when no multimedia content is played, determining the operating parameters of the exercise device according to the exercise data of the user within the predetermined period, and determining multimedia recommendation information according to the association between the operating parameters and the multimedia content; and, determining a target video or a target audio according to the multimedia recommendation information, and playing the target video or the target audio.

In some embodiments, the determining the target video or the target audio according to the multimedia recommendation information may include: determining, in response to a multimedia selection instruction of the user, the target video or the target audio; or, determining, according to exercise data of the user after the multimedia recommendation information is generated, the target video or the target audio.

In some embodiments, the target video or the target audio may include a plurality of playing chapters. The method may further include: when the target video or the target audio is played, controlling a playing chapter of the target video or a playing chapter of the target audio according to current exercise data of the user.

In some embodiments, the controlling the playing chapter of the target video or the playing chapter of the target audio according to the current exercise data of the user may include: in a case of determining that the user is in an exercise state according to the current exercise data, controlling the target video or the target audio to play a first playing chapter. The first playing chapter may be configured to indicate exercise action demonstration and/or music playback.

In some embodiments, the controlling the playing chapter of the target video or the playing chapter of the target audio according to the current exercise data of the user may include: in a case of determining that the user is in a rest state according to the current exercise data, controlling the target video or the target audio to play a second playing chapter. The second playing chapter may be configured to indicate exercise action explanation.

In some embodiments, after determining the target multimedia content to be played according to the exercise data of the user within the predetermined period and the association, the method may further include: in a case of playing the target multimedia content, if it is determined according to current exercise data of the user that a current exercise posture of the user does not meet a preset exercise posture, switching the target multimedia content being played. The multimedia content played after switching may be configured to demonstrate the preset exercise posture.

According to a second aspect of the present disclosure, a control system of the exercise device may include an association determining module and a device control module. The association determining module may be configured to obtain the association between the multimedia content and the operating parameters of the exercise device. The device control module may be configured to control the exercise device according to the multimedia content and the association, and/or determine the target multimedia content to be played according to the exercise data of the user within a predetermined period and the association.

In some embodiments, the control system of the exercise device may be configured in the exercise device, or in a mobile terminal device communicatively connected to the exercise device, or in a cloud server communicatively connected to the exercise device and the mobile terminal device, or partially configured in the mobile terminal device.

In some embodiments, the control system of the exercise device may further include a multimedia playback module. The multimedia playback module may be configured to play the target multimedia content. The multimedia playback module may be configured in the mobile terminal device, and communicatively connected to the device control module configured in the exercise device. The device control module may be further configured to control the exercise device according to the target multimedia content played by the multimedia playback module and the association.

According to a second aspect of the present disclosure, the exercise device may be provided. The exercise device may include a processor, a memory, a computer program, and a data bus. The computer program may be stored on the memory and executable by the processor. The data bus may be configured to realize connection and communication between the processor and the memory. When the computer program is executed by the processor, the control method of any of the exercise devices provided in the present disclosure may be implemented.

In some embodiments, the exercise device may further include a display apparatus. The display apparatus may be configured to play the multimedia content.

In some embodiments, the exercise device may be communicatively connected to the mobile terminal device. The exercise device may be configured to receive the target multimedia content sent by the mobile terminal. The target multimedia content may be configured to indicate a video or audio played on the mobile terminal device, so as to determine the operating parameters of the exercise device according to target multimedia playback information and the association between the multimedia content and the operating parameters of the exercise device; or adjust the target multimedia content played in the mobile terminal according to exercise data of a user within a predetermined period and the association.

The present disclosure may provide the control method of the exercise device, the control system of the exercise device, and the exercise device. The control method of the exercise device may obtain the association between multimedia content and operating parameters of the exercise device, so that when the user determines the multimedia content to be played, the exercise device may automatically adjust the operating parameters according to the multimedia content determined by the user to be played, without the user needing to adjust the operating parameters of the exercise device after determining the multimedia content. In addition, the control method may also determine the target multimedia content to be played according to the exercise data generated by the user exercising on the exercise device, which may simplify the process of adjusting the exercise device and the played multimedia content during the user's exercise, and enhance the user's experience of using the exercise device during the exercise process.

### BRIEF DESCRIPTION OF THE DRAWINGS

To more clearly illustrate the technical solutions in the embodiments of the present disclosure, the drawings required for describing the embodiments will be briefly introduced below. Obviously, the drawings described below are some embodiments of the present disclosure. For those of ordinary skill in the art, other drawings may be obtained based on these drawings without creative efforts.
Fig. 1 is a schematic flowchart of a control method of an exercise device according to an embodiment of the present disclosure.
Fig. 2 is a schematic flowchart of a control method of an exercise device according to another embodiment of the present disclosure.
Fig. 3 is a control system of an exercise device according to an embodiment of the present disclosure.
Fig. 4 is a schematic structural diagram of an exercise device according to an embodiment of the present disclosure.

### DETAILED DESCRIPTION

The technical solutions in the present disclosure will be clearly and completely described below with reference to the accompanying drawings in the present disclosure. Obviously, the described embodiments are part of the embodiments of the present disclosure, rather than all the embodiments. Based on the embodiments in the present disclosure, all other embodiments obtained by those of ordinary skill in the art without creative efforts shall fall within the protection scope of the present disclosure.

The flowcharts illustrated in the accompanying drawings are merely illustrative and may not include all contents and operations, nor may they be executed in the described order. For example, some operations may be decomposed, combined, or partially merged, so the actual execution order may be changed according to actual conditions.

The terms used in the specification of the present disclosure are only for the purpose of describing specific embodiments and are not intended to limit the present disclosure. As used in the specification of the present disclosure and the appended claims, the singular forms "a", "an", and "the" are intended to include the plural forms unless the context clearly indicates otherwise.

The present disclosure provides a control method of an exercise device, a control system of an exercise device, and an exercise device. The control method of the exercise device may be applied to a mobile terminal. The mobile terminal may be an electronic device such as a mobile phone, a tablet computer, a personal digital assistant, and a wearable device. The control method of the exercise device may also be applied to the exercise device. In some embodiments, the exercise device may at least include an electric motor and a cable. The electric motor may enable the cable to provide different resistance when being pulled, so that the user may encounter different resistance when pulling the cable in the exercise device, thereby requiring the user to use force matching with the resistance to pull the cable to achieve fitness exercise.

Some embodiments of the present disclosure will be described in detail below with reference to the accompanying drawings. In the case of no conflict, the following embodiments and the features in the embodiments may be combined with each other.

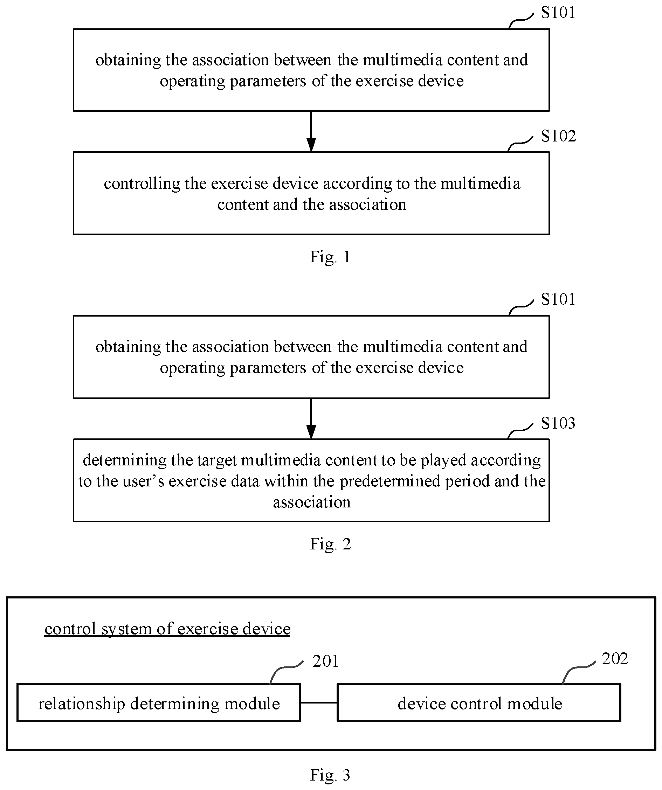

As illustrated in Fig. 1, Fig. 1 is a schematic flowchart of a control method of an exercise device according to an embodiment of the present disclosure.

As illustrated in Fig. 1, the control method of the exercise device may include operations at blocks S101 to S102.

The operation at block S101: obtaining an association between multimedia content and operating parameters of the exercise device.

In some implementations, the exercise device may be communicatively connected to a mobile terminal device, to obtain the association between the multimedia content and the operating parameters of the exercise device from the mobile terminal device.

In other implementations, the exercise device may determine the association between the multimedia content and the operating parameters of the exercise device in response to the user's input operation. That is, the user may also set the association between the multimedia content and the operating parameters of the exercise device on the exercise device.

The operation at block S102: controlling the exercise device according to the multimedia content and the association.

By associating the multimedia content with the operating parameters of the exercise device, in a case of adjusting the multimedia content, the exercise device may be controlled through the operating parameters associated with the multimedia content, without the need to separately adjust the multimedia content and the operating parameters of the exercise device.

In some embodiments, the multimedia content may include at least one video and/or at least one audio. The operation of controlling the exercise device according to the multimedia content and the association may include: determining a target video or a target audio to be played from the multimedia content; determining operating parameters of the exercise device according to the association between the target video and the operating parameters or the association between the target audio and the operating parameters.

The videos and/or audios included in the multimedia content may be, for example, videos for demonstrating exercise actions, videos or audios for explaining exercise actions, and music audios. The present disclosure does not limit the specific content of the videos and audios.

In some embodiments, after determining the target video to be played, the current operating parameters of the exercise device may be adjusted to the operating parameters matching with the target video according to the association between the target video and the operating parameters, so as to realize the control of the exercise device.

In some embodiments, determining the operating parameters of the exercise device according to the association between the target video and the operating parameters or the association between the target audio and the operating parameters may include: determining, according to the association between the target video and the operating parameters or the association between the target audio and the operating parameters, at least one of force output mode of the cable in the exercise device, the initial resistance, the target resistance matching with the cable when the cable is pulled to a preset distance, the resistance change mode of the cable, the cable pull repetitions, and the pulling distance of the cable.

In some embodiments, the force output modes may include a constant force mode, an eccentric mode, a chain mode, a rowing mode, and an intelligent mode. The constant force mode may keep the cable tension constant. The eccentric mode may mean that the force output when the cable is pulled out is different from that when the cable is retracted. The chain mode may mean that the force output of the cable changes with the pulling distance of the cable. The rowing mode may mean that the force output of the cable changes with the pulling speed of the cable. The intelligent mode may mean that the force output of the cable increases or decreases with the acceleration of the cable pulling.

In some embodiments, the multimedia content may include videos or audios used to indicate exercises for different body parts. After determining the target video or target audio to be played, it may be determined that the user needs to exercise the parts indicated by the target video or target audio, and based on this, the matched operating parameters of the exercise device may be adjusted.

Taking the exercise device as a resistance training device as an example, the device may include an electric motor. The electric motor may adjust the resistance of the cable in the device according to operating parameters, so that the user may pull the cable with different forces to achieve different exercise effects. When the user pulls the cable with the same exercise posture, the resistance of the cable may also gradually change according to parameters such as the pulling distance or pulling speed of the cable, prompting the user to change the force for pulling the cable, thereby achieving the purpose of muscle exercise.

The initial resistance of the cable may be configured to indicate the force required by the user to pull the cable when the cable is in an initial state. The initial state of the cable may include a state where the cable is not affected by external forces. In a specific implementation process, the initial resistance of the cable matching with videos indicating different exercise parts may be different.

The target resistance matching with the cable when the cable is pulled to a preset distance is used to indicate the tension of the cable after the user pulls the cable to the preset distance. That is, at this time, the user must provide a force greater than or equal to the target resistance, so as to pull the cable away from the exercise device or keep the cable stationary. In a specific implementation process, different resistance may be set according to different pulling distances of the cable. For example, the resistance is positively or negatively correlated with the pulling distance of the cable, so that the user may gradually increase or decrease the force for pulling the cable.

A resistance change mode of the cable may be used to indicate the change of the cable's resistance with the pulling distance of the cable and/or the change of the cable's resistance with the number of cable pull repetitions. Specifically, for example, according to a target video A, it may be determined that the cable's resistance is positively correlated with the cable's pulling distance. For another example, according to a target video B, it may be determined that the cable's resistance is negatively correlated with the cable's pulling distance, so as to provide different exercise modes for the user.

The number of cable pull repetitions is used to indicate the number of times the user has pulled the cable. In a specific implementation process, for example, when the number of cable pull repetitions is determined to be 10 according to a target video C, after the user pulls the cable 10 times, the cable may be locked or its resistance may be increased or decreased. If the cable is locked, the user may no longer pull the cable. If the resistance of the cable is increased, the cable may only be pulled by the user with greater effort. If the resistance of the cable is decreased, the cable may only be pulled by the user with less effort. In this way, the exercise of this stage may be completed, and the user may be reminded to rest or the user may be made aware of the completion of this exercise.

The pulling distance of the cable is used to indicate the distance that the cable is pulled out of the exercise device. By determining the pulling distance of the cable, the purpose of standardizing the user's exercise posture may be achieved, and the user may be prevented from pulling the cable too far during exercise.

Determining, through the played target video or target audio, at least one of the initial resistance of the cable in the exercise device, the target resistance matching with the cable when the cable is pulled to a preset distance, the resistance change mode, the number of cable pull repetitions, and the pulling distance of the cable may meet the personalized exercise needs of the user, the user's experience of using the exercise device may be enhanced.

In some embodiments, the target video and/or the target audio may include a plurality of playing chapters. The operation of determining the operating parameters of the exercise device according to the association between the target video and the operating parameters or the association between the target audio and the operating parameters may include: determining a target playing chapter according to the obtained chapter playing instruction; playing the target playing chapter; and, determining the operating parameters of the exercise device according to the association between the target playing chapter and the operating parameters.

In some embodiments, taking the target video as an example, the target video may include a plurality of playing chapters. For example, each playing chapter may match with an exercise mode for a different part. For instance, the first playing chapter may be used to instruct the user to exercise hand muscles, and the second playing chapter may be used to instruct the user to exercise back muscles. The matched operating parameters of the exercise device may be determined according to the played target playing chapter, eliminating the need for the user to adjust the exercise device when changing exercise parts. Alternatively, the first playing chapter may be used to instruct the user to perform a high-intensity exercise mode, and the second playing chapter may be used to instruct the user to perform a low-intensity exercise mode, the user may be guided to balance exercise and rest in combination with the parameter settings of the exercise device.

In a specific implementation process, when playing the first playing chapter, the exercise device may provide a first cable resistance, so that the user may exercise hand muscles when pulling the cable. After the first playing chapter is played and the second playing chapter starts to be played, the exercise device may adjust the provided first cable resistance to a second cable resistance, so that the user may exercise back muscles by using the provided second cable resistance. The first cable resistance may be less than the second cable resistance. The relationship between the playing chapters and the cable resistance provided above is only an illustrative description, and may not limit the relationship between the playing chapters and the cable resistance. In actual situations, the matched cable resistance may also be adjusted according to the user's own conditions. For example, for some users who have more hand muscle exercise, the exercise device may determine that the first cable resistance is greater than the second cable resistance.

In some embodiments, the method may further include: determining, according to the user's exercise data and preset chapter playing conditions, a chapter playing instruction.

In some embodiments, when the user's exercise data is less than or equal to an exercise data threshold, it may be determined that the chapter playing condition is met, so as to generate the chapter playing instruction. Specifically, the exercise data may include the exercise data of a certain body part of the user. When the exercise data matching with a certain body part, such as the arm, does not meet the matched exercise data threshold, it is determined that the chapter playing condition for playing arm exercise is met, and the chapter playing instruction configured to instruct to play arm exercise is generated. The exercise data matching with the arm may include data such as the number of cable pull repetitions and/or the pulling resistance of the cable completed by the user with the arm when the exercise device plays the arm exercise chapter.

By recording the user's historical exercise data and the preset chapter playing conditions, during the current exercise, the user may first exercise the parts that did not reach an exercise volume in the last exercise, thereby achieving a purpose of reminding the user of the exercise parts.

In a specific implementation process, the method may further include: adjusting the operating parameters of the exercise device according to the user's exercise data. The operating parameters of the exercise device may also be adjusted according to the user's exercise data to match the user's exercise situation. For example, the operating parameters of the exercise device are adjusted according to the user's exercise data and the set exercise data threshold. Specifically, when the exercise data threshold for adjusting the operating parameters is the same as the exercise data threshold for generating the chapter playing instruction, and it is determined that the user's exercise data is less than or equal to the exercise data threshold, the chapter playing instruction may be generated and the operating parameters of the exercise device may be adjusted. The exercise data threshold for adjusting the operating parameters and the exercise data threshold for generating the chapter playing instruction may also be different, so as to separately adjust the operating parameters of the exercise device and determine the chapter to be played.

The user's exercise data may be current exercise data or historical exercise data. By adjusting the operating parameters of the exercise device according to the current exercise data, the exercise device may be timely adapted to the user's current exercise situation. For example, when the user's current exercise data is less than or equal to the exercise data threshold, it is determined that the user is fatigued, thereby reducing the cable resistance of the exercise device to reduce the force exerted by the user during exercise, and enhance the exercise experience. When the user's exercise data is the historical exercise data, the operating parameters of the exercise device may be adaptively adjusted according to the user's exercise data at historical times, such as the exercise data matching with the user's last exercise, without the need for the user to adjust the operating parameters of the exercise device during exercise.

In some other embodiments, the method may further include: determining the chapter playing instruction according to the user's operation information.

In some embodiments, the playing chapters may be displayed in a playback progress bar of the target video. In this way, when the user selects a playing chapter in the playback progress bar of the target video, a chapter playing instruction may be determined. When the target playing chapter is played according to the chapter playing instruction, the operating parameters of the exercise device are adjusted, so that the user may independently select the chapter to be played, the purpose of adjusting the operating parameters of the exercise device may thus be achieved.

The user's operation information may be clicking operation information or voice control operation information, so as to enhance the convenience of adjusting the playing chapter.

In some embodiments, the method may further include: determining, according to the multimedia content, target multimedia content to be played on a target device. The playing region matching with the target multimedia content may further include a parameter display region. The parameter display region may be configured to display the operating parameters of the exercise device and/or the user's exercise data.

In some embodiments, after determining the target multimedia content to be played according to the multimedia content, the target multimedia content may be played on the target device. The target multimedia content is the target video or the target audio. The target device may include the exercise device and/or the mobile terminal device.

The target video matching with the target multimedia content may be played in the playing region of the target device. The operating parameters of the exercise device and/or the user's exercise data may be displayed in the parameter display region of the playing region, so that the user may easily know their own exercise situation.

In some embodiments, the playing region may further include a parameter control region. The parameter control region may be adjacent to, partially overlapping with, or completely overlapping with the parameter display region. The method may further include: adjusting the operating parameters of the exercise device in response to a parameter adjustment instruction from the user in the parameter control region.

In some embodiments, the parameter control region may be configured to receive user operations, to generate matched parameter adjustment instructions according to the user's operations, so as to adjust the operating parameters of the exercise device.

In a specific implementation process, when playing the multimedia content, a parameter adjustment window in the parameter control region may be hidden, so that an entire region of the playing region may be used to play the target video. When a wake-up operation from the user is received, such as clicking the playing region, the parameter adjustment window may be displayed in the parameter control region, allowing the user to adjust the operating parameters of the exercise device according to the displayed parameter adjustment window.

In some other implementations, the parameter adjustment window may be displayed with a preset transparency, so that when the parameter adjustment window is displayed in the playing region, the user's viewing of the target video in the playing region may not be affected.

In some other implementations, the exercise device may also be provided with a parameter adjustment region, allowing the user to adjust the operating parameters of the exercise device in the parameter adjustment region.

In some embodiments, controlling the exercise device according to the multimedia content and the association may include: obtaining the user's personal data; controlling the exercise device according to the personal data, the multimedia content, and the association.

In some embodiments, the user's personal data may include data such as the user's height, weight, exercise level, and grip strength. After determining initial operating parameters of the exercise device according to the multimedia content and the association, the initial operating parameters may be adjusted according to the user's personal data, so that the exercise device is more in line with the user's exercise needs. This may avoid a case where the user is unable to achieve good exercise results due to the small cable resistance provided, or this may avoid a case where the user faces difficulty in exercise due to the excessive cable resistance provided. In other words, the user may be prevented from obtaining the optimal exercise experience.

The control method of the exercise device provided by the above embodiment may control the exercise device through multimedia content, so that when the user determines the multimedia content, the exercise device may be automatically adjusted to a state suitable for the user's exercise. This eliminates the need for the user to adjust the exercise device after determining the multimedia content, reduces the preparation work before exercise, and enhances the user's experience during the exercise process.

As illustrated in Fig. 2, Fig. 2 is a schematic flowchart of a control method of an exercise device according to another embodiment of the present disclosure.

In the present embodiment, after the operation at block S101: obtaining the association between the multimedia content and the operating parameters of the exercise device, the operation at block S103 is performed: determining the target multimedia content to be played according to the user's exercise data within a predetermined period and the association.

In some embodiments, by determining the user's exercise data within a predetermined period, the operating parameters matching with the exercise device may be determined according to the exercise data, so that the target multimedia content to be played may be determined according to the association between the multimedia content and the operating parameters of the exercise device.

In some embodiments, determining the target multimedia content to be played according to the user's exercise data within a predetermined period and the association may include: when no multimedia content is played, determining the operating parameters of the exercise device according to the user's exercise data within a predetermined period, and determining multimedia recommendation information according to the association between the operating parameters and the multimedia content; determining the target video or the target audio according to the multimedia recommendation information, and playing the target video or the target audio.

In some embodiments, when the user first starts using the exercise device and no multimedia content is played, the operating parameters of the exercise device may be determined through the user's exercise data within a predetermined period. For example, after the user pulls the cable twice, after confirming that the cable of the exercise device has been pulled twice, the matched multimedia recommendation information may be determined. The target video or target audio to be played may be determined according to the multimedia recommendation information, and the matched target video or target audio may be played.

Generating the multimedia recommendation information through the user's exercise data within a predetermined period may allow determination of the target video or target audio to be played according to the multimedia recommendation information. This may enable the user to select the target video or target audio to be played through the exercise device. In this way, when the user has sat down and is preparing for exercise, if the user needs to select the target video or the target audio, the user does not need to stand up again, nor does the user need to put down the exercise components in his or her hands. The convenience of playing the target video and target audio may thus be enhanced.

In some embodiments, determining the target video or target audio according to the multimedia recommendation information may include: determining the target video or target audio in response to a multimedia selection instruction from the user.

In some embodiments, after generating the multimedia recommendation information, the multimedia recommendation information may be sent to the user to make the user aware of the multimedia recommendation information. Specifically, if the multimedia recommendation information is generated by the exercise device and the exercise device includes the display apparatus and/or an audio playback device, the multimedia recommendation information may be displayed on an information recommendation apparatus. If the multimedia recommendation information is generated by a mobile terminal device communicatively connected to the exercise device, the mobile terminal device may send the multimedia recommendation information to the exercise device for display on the display apparatus and/or audio playback device of the exercise device. The multimedia recommendation information may also be displayed on the mobile terminal device, allowing the user to determine the target video or target audio according to the multimedia recommendation information.

The generated multimedia recommendation information may be displayed only on the exercise device, only on the mobile terminal device communicatively connected to the exercise device, or jointly displayed on both the exercise device and the mobile terminal device communicatively connected to the exercise device. The present disclosure does not limit the device on which the multimedia recommendation information is displayed.

In some other embodiments, the target video or target audio may be determined according to the user's exercise data after the multimedia recommendation information has been generated.

In some embodiments, after generating the multimedia recommendation information, the user's exercise data may be determined to confirm the target video or target audio according to the multimedia recommendation information and the user's current exercise data. The exercise data may be determined through the user's operation on the exercise device. For example, the user may pull the cable three times to switch the video to be played in the multimedia recommendation information, and when selecting the target video to be played, pulls the cable once for a preset duration to start playing the target video. The user does not need to leave the exercise position to adjust the playback of the video or audio.

In other implementations, the target video or target audio selected by the user from the multimedia recommendation information may be determined through a shooting device and the user's exercise data.

In some embodiments, the target video or target audio may include a plurality of playing chapters. The method may further include: when the target video or target audio is played, controlling the playing chapter of the target video or the playing chapter of the target audio according to the user's current exercise data.

In some embodiments, during the playback of the target video, the playing chapter of the target video may be adjusted according to the user's current exercise data. The exercise data may indicate the user's current exercise posture, so that different chapters of the video may be played when the user is in different exercise postures, such as resting or exercising. This may ensure that the video does not continuously play exercise-instructing content when the user is resting, preventing the user from missing the demonstration of exercise chapters due to rest and needing to readjust the video playback progress.

The user may determine the target video according to the multimedia recommendation information or through a selection operation on the video or audio, so that the exercise device may determine the operating parameters according to the target video and play the target video.

In some embodiments, controlling the playing chapter of the target video or the playing chapter of the target audio according to the user's current exercise data may include: when determining that the user is in an exercise state according to the current exercise data, controlling the target video or target audio to play a first playing chapter The first playing chapter may be configured to indicate exercise action demonstration and/or music playback.

In some embodiments, the first playing chapter may be, for example, a demonstration of exercise actions. In this playing chapter, a coach or professional user may demonstrate actions during exercise, allowing the user watching the playing chapter to follow along and practice.

During the playback of this playing chapter, the operating parameters of the exercise device may be adjusted to those matching with the playing chapter. For example, if the first playing chapter is a chapter for demonstrating arm muscle exercise, the operating parameters of the exercise device may be adjusted to those matching with arm muscle exercise, so that the user may follow and practice the first playing chapter based on the operating parameters provided by the exercise device. The specific adjustment process of the operating parameters of the exercise device may refer to the above embodiment of controlling the exercise device according to the target video, and would not be repeated here.

In some other embodiments, controlling the playing chapter of the target video or the playing chapter of the target audio according to the user's current exercise data may include: when determining that the user is in a rest state according to the current exercise data, controlling the target video or target audio to play a second playing chapter The second playing chapter may be configured to indicate an exercise action explanation chapter or to instruct the user to adjust for rest.

In some embodiments, when it is determined that the user is in a rest state according to the current exercise data and the target video is playing the first playing chapter, the target video may be controlled to jump to play the second playing chapter. The second playing chapter may be configured to indicate exercise action explanation, and may also be configured to indicate music playback, which is not limited by the present disclosure.

In some embodiments, if the user's current exercise data is continuously detected to be less than the exercise data threshold within a preset duration, it is determined that the user is in a rest state. For example, if the cable tension is continuously detected to be 0 within 90 seconds, the user may be determined to be in the rest state, and the target video may be controlled to play the second playing chapter.

In a specific implementation process, the second playing chapter is, for example, an exercise action explanation chapter. In this playing chapter, a coach or professional user may decompose and explain the exercise actions demonstrated in the first playing chapter, enabling the user watching this chapter to confirm his or her own exercise actions and exercise effects based on the decomposition and explanation of the actions.

By determining whether the user is resting, jump playback of the target video's playing chapters may be controlled. This may allow the user to practice along with the first playing chapter of the target video during exercise, and watch the action explanation in the second playing chapter during rest, thereby enhancing the exercise effect. Additionally, it may prevent the user from missing information in the video and the need to rewind the video progress. The missing information may be due to continuous playback during rest. In this way, the convenience of video playback during the user's exercise may be enhanced.

In some embodiments, after determining the target multimedia content to be played according to the user's exercise data within a predetermined period and the association, the method may further include: when the target multimedia content is played, if it is determined according to the user's current exercise data that the user's current exercise posture does not meet a preset exercise posture, switching the target multimedia content being played. The multimedia content played after switching may be configured to demonstrate the preset exercise posture.

In some embodiments, the target video or target audio to be played is determined by using the exercise data and the association between the operating parameters of the exercise device and the multimedia content, and the target video or target audio to be played is played; during the playback of the target video or target audio, it is determined whether the user's current exercise posture meets the preset exercise posture according to the user's current exercise data. If the user's current exercise posture does not meet the preset exercise posture, the target multimedia content being played is switched, so that the multimedia content played after switching may prompt the user of the preset exercise posture.

In some embodiments, the preset exercise posture is displayed through a pre-recorded video by a coach or professional user, enabling the user to adjust his or her exercise posture according to the video played after switching, thereby enhancing the exercise effect.

The control method of the exercise device provided by the above embodiment may determine the target video or target audio to be played through the user's exercise data, so that the user does not need to leave the exercise position to adjust the target multimedia content during exercise. In addition, when the user is in an exercise state or rest state during exercise, the target multimedia content may automatically jump to play, preventing the user from missing the video and enhancing the user's experience during the exercise process.

As illustrated in Fig. 3, Fig. 3 is a control system of an exercise device according to an embodiment of the present disclosure.

The control system of an exercise device provided by the present disclosure may include a relationship determining module 201 and a device control module 202. The relationship determining module 201 may be configured to obtain the association between multimedia content and the operating parameters of the exercise device. The device control module 202 may be configured to control the exercise device according to the multimedia content and the association, and/or determine the target multimedia content to be played according to the user's exercise data within a predetermined period and the association. The control of the operating parameters of the exercise device and/or the determination of the target multimedia content according to the exercise data may be realized through the control system of the exercise device.

In some embodiments, the control system of the exercise device may be configured in an application program, such as an APP, or a network platform.

The control system of the exercise device may further include modules other than those provided in the above embodiments to implement the operations in each embodiment of the control method of the exercise device described above. The description of implementing the control method of the exercise device based on the control system of the exercise device would not be repeated here.

In some embodiments, the control system of the exercise device may be configured in the exercise device.

In some embodiments, the control system of the exercise device may be configured in the exercise device in the form of an application program, thereby enabling the exercise device to obtain the association between multimedia content and operating parameters, adjust the operating parameters according to the determined target multimedia content and the association between the multimedia content and the operating parameters, and/or adjust the target multimedia content according to the exercise data within a predetermined period and the association.

In the present embodiment, the control system of the exercise device may further include a multimedia content sending module. The multimedia content sending module may be communicatively connected to the target mobile terminal device, so as to send the determined target multimedia content to the target mobile terminal device, enabling the target mobile terminal device to play the target multimedia content.

In some other embodiments, the control system of the exercise device may be configured in the mobile terminal device communicatively connected to the exercise device.

In some embodiments, the control system of the exercise device may be configured in the mobile terminal device in the form of the application program. A signal processing module may be configured in the exercise device. The signal processing module may be communicatively connected to the control system of the exercise device. The control system of the exercise device may send the determined operating parameters of the exercise device to the signal processing module of the exercise device, so as to realize the control of the exercise device.

In still other embodiments, the control system of the exercise device may be configured in a cloud server. For example, a configuration approach of the control system may adopt the form of a network platform. The cloud server may be communicatively connected to the mobile terminal device and the exercise device, enabling the mobile terminal device to send the multimedia playback information to the cloud server. The control system of the exercise device in the cloud server may determine the device to play the target multimedia content according to the multimedia playback information, and send a control instruction to the exercise device to realize the control of the exercise device. The exercise device may send the exercise data to the cloud server. The cloud server may determine the target multimedia content to be played and the device according to the exercise data, so that the matched device may play the target multimedia content.

In yet another embodiment, the control system of the exercise device may be partially configured in the mobile terminal device communicatively connected to the exercise device. The exercise control system may be separately configured in the exercise device and the mobile terminal device. For example, the exercise control system may be configured in the mobile terminal device in the form of a mobile terminal application program, and at the same time configured in the exercise device in the form of an exercise device application program, enabling the exercise device to communicate with the mobile terminal device, thereby realizing the control of the exercise device through the mobile terminal device and/or realizing the control of the mobile terminal device through the exercise device.

In some embodiments, the control system of the exercise device may further include a multimedia playback module. The multimedia playback module may be configured to play the multimedia content. The multimedia playback module may be configured in the mobile terminal device and communicatively connected to the device control module that is configured in the exercise device. The device control module may be further configured to control the exercise device according to the target multimedia content played by the multimedia playback module and the association.

In some embodiments, the multimedia playback module may be configured in the mobile terminal device to play the target multimedia content, such as the target video, on the mobile terminal device. In this way, when the user determines the target multimedia content to be played on the mobile terminal device, the mobile terminal device may send the target multimedia content or the control instruction matching with the target multimedia content to the device control module of the exercise device, realizing the control of the exercise device. The device control module of the exercise device may also determine the target multimedia content according to the exercise data, and send the target multimedia content to the mobile terminal device, so as to enable the mobile terminal device to play the target multimedia content. Or the device control module of the exercise device may send the exercise data to the mobile terminal device, so that the multimedia playback module in the mobile terminal device or a module communicatively connected to the multimedia playback module may determine the target multimedia content according to the exercise data and play the target multimedia content based on the multimedia playback module, thereby realizing the determination of the target multimedia content according to the exercise data. In some embodiments, the control system of the exercise device may further include a user exercise data storage module. The user exercise data storage module may be configured to store the user's historical exercise data or user preference settings. The user exercise data storage module may be configured in the mobile terminal device and communicatively connected to the device control module configured in the exercise device. The user exercise data storage module may be further configured to control the exercise device according to the user's historical exercise data or user preference settings.

In some embodiments, when the user's mobile terminal device is communicatively connected to the exercise device through the control system of the exercise device, the mobile terminal device may send the user's historical exercise data or user preference settings in the user exercise data storage module to the device control module of the exercise device, so that the device control module may determine the operating parameters according to the user's historical exercise data or user preference settings. Alternatively, the mobile terminal device may further include a module for generating, according to the user's historical exercise data or user preference settings in the user exercise data storage module, the control instructions for the exercise device. This module may generate the control instructions for the exercise device and send the control instructions to the device control module, enabling the device control module to adjust the operating parameters of the exercise device according to the control instructions of the exercise device, realizing the control of the exercise device according to the user's historical exercise data or user preference settings. This may allow the user to control the exercise device using the user's historical exercise data or user preference settings stored in the user exercise data storage module of the mobile terminal device when the user communicatively connects different exercise device through the mobile terminal device, without the need for the user to perform multiple configurations.

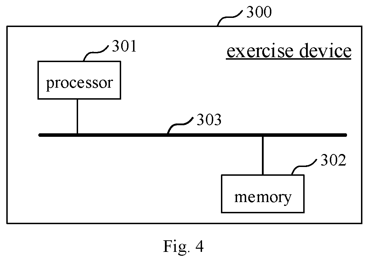

As illustrated in Fig. 4, Fig. 4 is a schematic structural diagram of an exercise device according to an embodiment of the present disclosure.

As illustrated in Fig. 4, an exercise device 300 may include a processor 301 and a memory 302. The processor 301 and the memory 302 may be connected through a bus 303. The bus 303 may be such as an I2C (Inter-integrated Circuit) bus.

Specifically, the processor 301 may be configured to provide computing and control capabilities to support operation of the entire exercise device. The processor 301 may be a central processing unit (CPU), and may also be other general-purpose processors, digital signal processors (DSP), application-specific integrated circuits (ASIC), field-programmable gate arrays (FPGA), or other programmable logic devices, discrete gate or transistor logic devices, discrete hardware components, or the like. The general-purpose processor may be a microprocessor or any conventional processor, or the like.

Specifically, the memory 302 may be a flash chip, a read-only memory (ROM), a magnetic disk, an optical disk, a U-disk, a mobile hard disk, or the like.

Those skilled in the art may understand that the structure illustrated in Fig. 4 is only a block diagram of a part of the structure related to the solution of the present disclosure, and may not limit the exercise device to which the solution of the present disclosure is applied. The specific exercise device may include more or fewer components than those illustrated in Fig. 4 or combine certain components, or have different component arrangements.

The processor may be configured to run a computer program stored in the memory. The processor, while executing the computer program, may implement any one of the control methods of the exercise device provided in the present disclosure.

In some embodiments, the processor may be configured to run a computer program stored in the memory. The processor, while executing the computer program, may implement the operations: obtaining the association between the multimedia content and the operating parameters of the exercise device; controlling the exercise device according to the multimedia content and the association, or determining the target multimedia content to be played according to the user's exercise data within a predetermined period and the association.

Those skilled in the art may clearly understand that, for the convenience and conciseness of description, the specific operating process of the exercise device described above may refer to the matched process in the foregoing embodiment of the control method of the exercise device, and would not be repeated here.

In an implementation manner, the exercise device may determine the association between multimedia data and operating parameters in response to the user's relationship establishment operation. Alternatively, the exercise device may be preset with the association between the multimedia data and the operating parameters, so as to implement any embodiment provided by the control method of the exercise device described above.

In a specific implementation process, the exercise device may include a display apparatus The display apparatus may be configured to play the multimedia content.

The user may determine the target multimedia content to be played in the exercise device. The exercise device may determine the operating parameters of the exercise device according to the target multimedia content determined by the user and the association, thereby realizing the control of the exercise device according to the multimedia content, so that the user does not need to adjust the exercise device when starting exercise. Alternatively, after determining the user's current exercise data, the exercise device may determine the target multimedia content to be played according to the current exercise data based on the current exercise data and the association, so that the user does not need to leave the position to adjust the played multimedia content during exercise, thereby enhancing the user's exercise experience.

In another implementation manner, the exercise device may obtain the association between the multimedia data and the operating parameters from the mobile terminal device communicatively connected to the exercise device, so as to realize the control of the exercise device according to the multimedia content or the determination of the target multimedia content to be played according to the current exercise data.

The specific implementation process of obtaining the association between multimedia content and operating parameters, and controlling the exercise device according to the multimedia content or determining the target multimedia content to be played according to the current exercise data in the implementation manner provided above may refer to any embodiment in the foregoing control method of the exercise device, and would not be described here.

In still another implementation manner, the exercise device may be communicatively connected to the mobile terminal device. The exercise device may be configured to receive the target multimedia content sent by the mobile terminal. The target multimedia content may be configured to indicate the video or audio played on the mobile terminal device, so as to determine the operating parameters of the exercise device according to the target multimedia playback information and the association between the multimedia content and the operating parameters of the exercise device; or to adjust the target multimedia content played in the mobile terminal according to the user's exercise data within a predetermined period and the association.

After the user determines the target multimedia content to be played in the mobile terminal device, the mobile terminal device may play the target video or target audio matching with the target multimedia content, and send the target multimedia content to the exercise device, so that the exercise device may determine the operating parameters according to the stored association between the multimedia content and the operating parameters. Alternatively, the mobile terminal device may determine the control instruction according to the target multimedia content and the stored association between the multimedia content and the operating parameters of the exercise device, and send the control instruction to the exercise device. In this way, the exercise device may determine the operating parameters according to the control instruction.

When the mobile terminal is not playing the target video or target audio, or during the playback of the target video or target audio, the mobile terminal device may receive the current operating parameters of the exercise device, and adjust the played target video or target audio based on the stored association between the multimedia content and the operating parameters of the exercise device. The current operating parameters of the exercise device may be determined according to the user's current exercise data and/or current exercise posture. Alternatively, the mobile terminal device may receive the multimedia playback information sent by the exercise device, and adjust the played target multimedia content according to the multimedia playback information The multimedia playback information may be determined according to the current operating parameters of the exercise device and the association between the multimedia content stored in the exercise device and the operating parameters of the exercise device.

Playing the target video on the mobile terminal device may allow for more convenient adjustment of the video playback position when the user changes exercise actions, and facilitate the user to watch the video when performing certain exercise actions. For example, when the user is exercising back muscles, if the target video is played through the display apparatus on the exercise device, the user cannot watch the video in real time during exercise. Playing the target video through the mobile terminal device may enable adjusting the placement position of the mobile terminal device, solving the above problem of being unable to watch the video in real time and enhancing the user's experience during exercise.

In yet another implementation manner, the exercise device may include a display apparatus configured to display first parameters. The mobile terminal device may be configured to display second parameters The second parameters may be parameters obtained through arithmetic processing according to the first parameters and/or the operating parameters of the exercise device. Specifically, the mobile terminal device may display the average cable pulling speed, consumed calorie data, or the like, determined according to the user's exercise data, while the set operating parameters, such as the set cable resistance, may be displayed on the exercise device. By displaying high-level parameters on the mobile terminal device, excessive operation rules in the exercise device may be avoided, and manufacturing cost of the exercise device may be reduced.

The term "and/or" used in the specification of the present disclosure and the appended claims may refer to any combination and all possible combinations of one or more of the associated listed items, and may include these combinations. In the present description, the terms "include", "comprise" or any other variants thereof are intended to cover non-exclusive inclusion, so that a process, method, article or system including a series of elements may not only include those elements, but also may include other elements not explicitly listed, or elements inherent to such a process, method, article or system. Without further restrictions, an element defined by the phrase "including a..." does not exclude the presence of other identical elements in the process, method, article or system including the element.

The sequence numbers of the present disclosure mentioned above are only for description and do not represent the advantages or disadvantages of the embodiments. The above are only specific embodiments of the present disclosure, but the protection scope of the present disclosure is not limited thereto. Any person skilled in the art may easily think of various equivalent modifications or substitutions within the technical scope disclosed by the present disclosure, and these modifications or substitutions should all fall within the protection scope of the present disclosure. Therefore, the protection scope of the present disclosure should be subject to the protection scope of the claims.

## Claims

1. A control method of an exercise device, comprising:
obtaining an association between multimedia content and operating parameters of the exercise device; and
controlling, according to the multimedia content and the association, the exercise device; or determining, according to exercise data of a user within a predetermined period and the association, target multimedia content to be played.

2. The control method of the exercise device of claim 1, wherein
the multimedia content comprises at least one video and/or at least one audio, and controlling, according to the multimedia content and the association, the exercise device comprises:
determining a target video or a target audio to be played from the multimedia content; and
determining the operating parameters of the exercise device according to the association between the target video and the operating parameters or the association between the target audio and the operating parameters.

3. The control method of the exercise device of claim 2, wherein
determining the operating parameters of the exercise device according to the association between the target video and the operating parameters or the association between the target audio and the operating parameters comprises:
determining, according to the association between the target video and the operating parameters or the association between the target audio and the operating parameters, at least one of: a force output mode of a cable in the exercise device, an initial resistance, a target resistance matching with the cable when the cable is pulled to a preset distance, a resistance change mode of the cable, the number of cable pull repetitions, or a pulling distance of the cable.

4. The control method of the exercise device of claim 2 or 3, wherein
the target video and/or the target audio comprises a plurality of playing chapters;
the determining the operating parameters of the exercise device according to the association between the target video and the operating parameters or the association between the target audio and the operating parameters comprises:
determining a target playing chapter according to an obtained chapter playing instruction; and
playing the target playing chapter, and determining the operating parameters of the exercise device according to the association between the target playing chapter and the operating parameters.

5. The control method of the exercise device of claim 4, further comprising:
determining the chapter playing instruction according to the exercise data of the user and preset chapter playing conditions.

6. The control method of the exercise device of any one of claims 1-3, further comprising:
determining the target multimedia content to be played on a target device according to the multimedia content;
wherein a playing region matching with the target multimedia content further comprises a parameter display region, and the parameter display region is configured to display the operating parameters of the exercise device and/or the exercise data of the user.

7. The control method of the exercise device of claim 6, wherein
the playing region further comprises a parameter control region, and the parameter control region is adjacent to, partially overlapping with, or completely overlapping with the parameter display region;
the method further comprises:
adjusting, in response to a parameter adjustment instruction of the user in the parameter control region, the operating parameters of the exercise device.

8. The control method of the exercise device of any one of claims 1-3, wherein
the controlling the exercise device according to the multimedia content and the association comprises:
obtaining personal data of the user; and
controlling the exercise device according to the personal data, the multimedia content, and the association.

9. The control method of the exercise device of claim 1, wherein
determining, according to the exercise data of the user within the predetermined period and the association, the target multimedia content to be played comprises:
when no multimedia content is played, determining the operating parameters of the exercise device according to the exercise data of the user within the predetermined period;
determining, according to the association between the operating parameters and the multimedia content, multimedia recommendation information; and
determining a target video or a target audio according to the multimedia recommendation information, and playing the target video or the target audio.

10. The control method of the exercise device of claim 9, wherein
determining the target video or the target audio according to the multimedia recommendation information comprises:
determining, in response to a multimedia selection instruction from the user, the target video or the target audio; or
determining, according to exercise data of the user after the multimedia recommendation information is generated, the target video or the target audio.

11. The control method of the exercise device of claim 9, wherein
the target video or the target audio comprises a plurality of playing chapters, and the method further comprises:
when the target video or the target audio is played, controlling a playing chapter of the target video or a playing chapter of the target audio according to current exercise data of the user.

12. The control method of the exercise device of claim 11, wherein
the controlling the playing chapter of the target video or the playing chapter of the target audio according to the current exercise data of the user comprises:
in a case of determining that the user is in an exercise state according to the current exercise data, controlling the target video or the target audio to play a first playing chapter; wherein the first playing chapter is configured to indicate exercise action demonstration and/or a music playback.

13. The control method of the exercise device of claim 11, wherein
the controlling the playing chapter of the target video or the playing chapter of the target audio according to the current exercise data of the user comprises:
in a case of determining that the user is in a rest state according to the current exercise data, controlling the target video or the target audio to play a second playing chapter, and the second playing chapter is configured to indicate exercise action explanation.

14. The control method of the exercise device of any one of claims 9-13, wherein
after determining, according to the exercise data of the user within the predetermined period and the association, the target multimedia content to be played, the method further comprises:
in a case of playing the target multimedia content, if it is determined according to current exercise data of the user that a current exercise posture of the user does not meet a preset exercise posture, switching the target multimedia content being played; wherein the multimedia content played after switching is configured to demonstrate the preset exercise posture.

15. A control system of an exercise device, comprising:
an association determining module, configured to obtain an association between multimedia content and operating parameters of the exercise device; and
a device control module, configured to: control, according to the multimedia content and the association, the exercise device; and/or determine, according to exercise data of a user within a predetermined period and the association, target multimedia content to be played.

16. The control system of the exercise device of claim 15, wherein
the control system of the exercise device is configured in the exercise device, or in a mobile terminal device communicatively connected to the exercise device, or in a cloud server communicatively connected to the exercise device and the mobile terminal device, or partially configured in the mobile terminal device.

17. The control system of the exercise device of claim 16, wherein
the control system of the exercise device further comprises a multimedia playback module, and the multimedia playback module is configured to play the target multimedia content;
the multimedia playback module is configured in the mobile terminal device, and communicatively connected to a device control module configured in the exercise device; the device control module is further configured to control according to the target multimedia content played by the multimedia playback module and the association, the exercise device.

18. An exercise device, comprising a processor, a memory, a computer program, and a data bus, wherein
the computer program is stored on the memory and executable by the processor; the data bus is configured to realize connection and communication between the processor and the memory; and
when the computer program is executed by the processor, the control method of the exercise device of any one of claims 1-13 is implemented.

19. The exercise device of claim 18, wherein
the exercise device further comprises a display apparatus, and the display apparatus is configured to play the multimedia content.

20. The exercise device of claim 18, wherein
the exercise device is communicatively connected to a mobile terminal device; the exercise device is configured to receive target multimedia content sent by the mobile terminal;
the target multimedia content is configured to indicate a video or audio played on the mobile terminal device, so as to determine operating parameters of the exercise device according to target multimedia playback information and an association between multimedia content and the operating parameters of the exercise device; or adjust the target multimedia content played in the mobile terminal according to exercise data of a user within a predetermined period and the association.
